# EUROPEAN PATENT SPECIFICATION

(11) **EP 2 805 130 B1**
(45) Date of publication and mention of the grant of the patent: **06.05.2020**
(21) Application number: 12861226.4
(22) Date of filing: 21.12.2012
(51) Int. Cl.: G01B 11/26, G01B 11/06, G01B 11/14, G01N 21/89, D21F 7/06

(54) **MEASUREMENT OF OBJECT TO BE MEASURED**
MESSUNG EINES ZU MESSENDEN OBJEKTS
MESURE D'OBJET À MESURER

(30) Priority: 28.12.2011 FI 20116329
(43) Date of publication of application: 26.11.2014
(73) Proprietor: Valmet Automation Oy, 02150 Espoo (FI)
(72) Inventor: MÄNTYLÄ, Markku, FI-02150 Espoo (FI); GRAEFFE, Jussi, FI-02150 Espoo (FI); NIEMELÄ, Karri, FI-90590 Oulu (FI); KERÄNEN, Heimo, FI-90590 Oulu (FI); SUOPAJÄRVI, Pekka, FI-90590 Oulu (FI); KURKI, Lauri, FI-90590 Oulu (FI)
(74) Representative: Kolster Oy Ab
(86) International application number: PCT/FI2012/051293
(87) International publication number: WO 2013/098482

(56) References cited:
- WO-A1-2011/000665
- WO-A1-2011/000665
- WO-A1-2011/000667
- JP-A- H06 273 162
- JP-A- H06 273 162
- US-A- 5 798 836
- US-A1- 2006 132 808
- US-A1- 2009 056 156
- US-A1- 2009 056 156

## Description

### Field

The invention relates to a measuring device and a method of measuring an object to be measured.

### Background

The distance of a surface of a paper web from a sensor may be measured optically, for instance. In order to measure thickness, the distance of the surface of the paper web has been measured by two mutually aligned measuring units between which the paper web resides. Each measuring unit comprises as least three sensors in an at least two-dimensional space, since by means of anything less it is impossible to determine the inclination of the paper web in the machine and cross machine directions of the paper web in a three-dimensional space. Each sensor is focused on one sensor of a measuring unit provided on the opposite side such that the location of these sensors that are meant to form a pair differs from one another only in the direction of the distance between the measuring units.

In addition to the inclination of the paper web, the measurement is further complicated by the fact that the distance L between the measuring units may depend on the sensor i, i.e. also the measuring units may be inclined with respect to one another. In such a case, the distance between the measuring units has to be measured from three different points, as when measuring the inclination angle of the paper web. The distance between measuring units may be measured optically or magnetically, for instance. Patent document US 2009/0056156 presents a web measurement device. Patent document US 5,798,836 presents an optical distance measuring apparatus and a method thereof. Patent document WO 2011/000665 presents a method and an apparatus for the contactless determination of the thickness of a web of material, including correction of the alignment error. Patent document WO 2011/000667 presents a method for the contactless determination of the thickness of a web material. Patent document US 2006/0132808 presents a thin thickness measurement method and an apparatus. Patent document JP H06 273162 presents a flatness measuring device.

Such a measuring unit solution is large, complex and difficult to align mutually, which makes the measurement more difficult and less accurate. Therefore, a need exists to develop the measurement of a paper web.

### Brief description

An object of the invention is to provide an improved measuring solution. This is achieved by a measuring device according to claim 1.

The invention also relates to a method according to claim 13.

Preferred embodiments of the invention are disclosed in the dependent claims.

The measuring device and method according to the invention provide several advantages. The measuring unit is simple and capable of utilizing a one-dimensional row of sensors for measuring one surface of an object to be measured.

### List of figures

The invention is now described in greater detail in connection with preferred embodiments and with reference to the accompanying drawings, in which:
Figure 1 shows prior art measurement,
Figure 2 shows two crosswise sensor rows between which an object to be measured is to reside,
Figure 3 is a perspective view of measurement wherein the sensor rows are inclined with respect to the object to be measured,
Figure 4 is a perspective view of measurement wherein the sensor rows are inclined and rotated with respect to the coordinate system of the object to be measured,
Figure 5 is a perspective view of measurement wherein the sensor rows show angular variation with respect to one another,
Figure 6 shows a principle of measuring an origin,
Figure 7 shows measurement of profiles from the object to be measured,
Figure 8 shows structural light measurement,
Figure 9 shows measurement based on chromatic separation of foci,
Figure 10 shows another measurement based on chromatic separation of foci,
Figure 11 shows an intensity detected by a detector row as a function of wavelength and location,
Figure 12 shows profiles measured in different directions,
Figure 13 shows a paper machine, and
Figure 14 is a flow chart of the method.

### Description of embodiments

In the present application, optical radiation refers to electromagnetic radiation whose wavelength band ranges between ultraviolet radiation (wavelength about 50 nm) and infrared radiation (wavelength about 500 µm). A measuring device is shown below for measuring at least one property of at least approximately planar object to be measured. At each of its measuring points, a surface of the planar object to be measured is at least approximately a plane. The surface of the object to be measured should reflect optical radiation. The surface of the object to be measured refers to an interface provided between an object to be measured and its surroundings. The object to be measured, which may be immobile or moving at the moment of measurement, may be e.g. paper, soft tissue, cardboard, chemical pulp, plastic, metal, fabric, glass or the like. The object to be measured may be a coating for paper, soft tissue, cardboard, chemical pulp, plastic, metal, fabric, glass or the like. Such objects to be measured have two large, approximately planar surfaces close to one another such that the length of the planar surface in a direction of at least one dimension is several times greater than a distance between the surfaces. In many cases, the length in the direction of the surface is tens, hundreds or thousands times greater than the distance between the surfaces. The ratio may be even higher, since e.g. a paper web is basically endless while the thickness of the paper may be e.g. 0.1 mm. Thus, theoretically, the length of the object to be measured divided by the thickness may also be infinite.

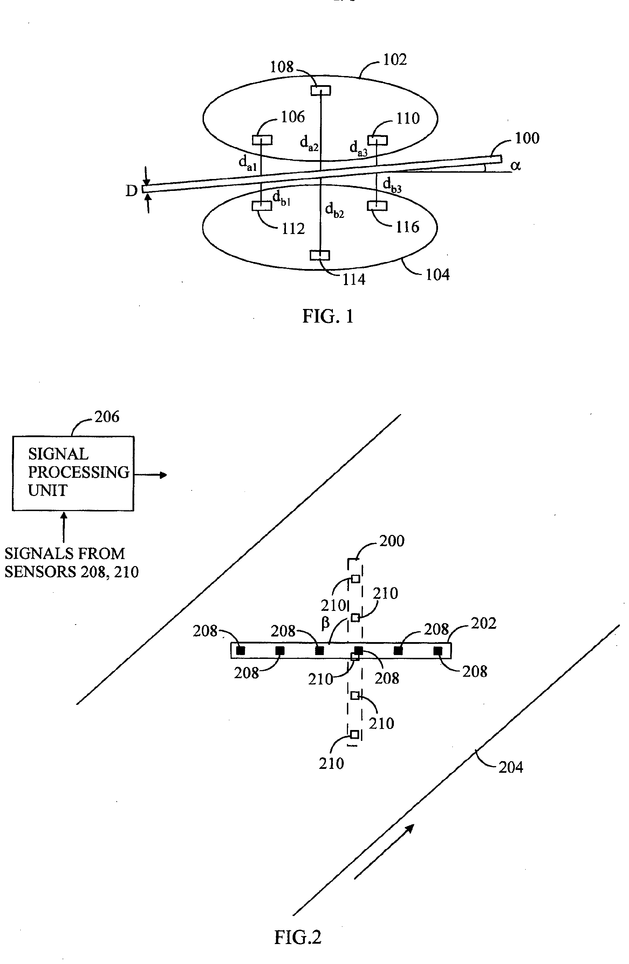

Figure 1 shows prior art measurement of a paper web. In this example, a measuring unit 102 comprises three sensors 106, 108, and 110. Similarly, a measuring unit 104 also comprises three sensors 112, 114, and 116. The sensors 112, 114, and 116 reside in the measuring unit 104 in locations that are obtained by parallel movement of the sensors 106, 108, and 110 to the opposite side of the paper web 100 in a direction of measurement of the sensors 106 to 110. In a general case, a pattern formed by the sensors in one measuring unit is a polygon in a two- or three-dimensional space.

After distances dₐ₁ to dₐₙ, d_{b1} to d_{bn} between the sensors 106 to 110, 112 to 116 of the measuring units 102, 104 and the paper web 100, where a refers to one side of the paper web 100, b refers to another side thereof and n is the number of sensors, have been measured from different sides of the paper web 100, a thickness D of the paper web 100 may be determined at each sensor i (i = 1 ... n) when a distance L between the measuring units 102, 104 is known. The thickness D is then e.g. D = L - (dₐᵢ + d_{bi}). This measurement result D still includes an error caused by an inclination angle α. The inclination angle α may be determined when the distances and directions from one another of the sensors 106 to 110, 112 to 116 of at least one measuring unit 102, 104 are known, since the inclination angle α is proportional to a change in the distance of the paper web 100 over a distance between the sensors 106 to 110, 112 to 116. The corrected thickness Dₖₒᵣ of the paper web is then Dₖₒᵣ = D*cos(α), where cos is a trigonometric cosine function and α is the inclination angle in a desired direction.

Let us now view the disclosed solution by means of Figure 2, which is a top view of a measuring configuration. The measuring device comprises a first optical sensor row 200 and a second optical sensor row 202 between which a planar object 204 to be measured may be placed. Each sensor row 200, 202 comprises at least two sensors 208, 210. One sensor row 200, 202 may consist of hundreds, thousands or even millions of single sensors without, however, being restricted to these numbers. In a row, the sensors 208, 210 are located one after the other, thus forming a one-dimensional layout chain. The one-dimensional layout of the sensors 208, 210 of one sensor row 200, 202 provides information on the surface of the object 204 to be measured in the direction of one dimension. The direction of each sensor row 200, 202 may be determined as a direction based e.g. on the straight line of the smallest square sum when the location of the sensors 208, 210 is used as values of coordinates in the calculation.

The direction of the first sensor row 200 and the direction of the second sensor row 202 differ from one another. This, however, enables data to be obtained from different sides of the object 204 to be measured in the direction of different dimensions, and the two crosswise sensor rows 200, 202 enable two-dimensional data to be obtained about the object 204 to be measured. An angle β between the sensor rows 200, 202 may be any angle between ]0° and 90°]. It may often be reasonable to choose the angle between the sensor rows 200, 202 to be between [45° and 90°]. The sensor rows 200, 202 may be straight, but this is not necessary. The sensor rows 200, 202 may also be curved, in which case the angle β between the sensor rows 200, 202 means an average angular deviation of the sensor rows 200, 202 from one another. Generally, the positions of the sensor rows 200, 202 do not much change at all after installation. Empirically it has been found that the angle β between the sensor rows 200, 202 does not much change by more than 0.1° even in the long run.

From the optical signal received from a surface 220 of the object 204 to be measured, each sensor 208 of the first sensor row 200 forms data containing information on the distance between the object 204 to be measured and the sensor 208. The formed data may usually be included in an electric signal, which may be analog or digital. Each sensor 208 may transmit the data wirelessly or wiredly separately or as a signal combined with data from other sensors.

Each sensor 210 of the second sensor row 202 forms data representing the distance between a surface 222 of the object 204 to be measured and the sensor 210. The formed data may be included in an electric signal, which may be analog or digital. Each sensor 210 may transmit the data wirelessly or wiredly separately or as a signal combined with data from other sensors.

The measuring device may further include a signal processing unit 206 which may determine the thickness of the object 204 to be measured, which is the distance between the surfaces 220 and 222, on the basis of the data formed by the sensors 208, 210 and the data about the distance between the first sensor row 200 and the second sensor row 202 available to the signal processing unit 206.

In order to measure a property of the object 204 to be measured, an intersection (x₀, y₀) of the directions of the first sensor row 200 and the second sensor row 202, distance Z between the sensor rows 200, 202, and angular variation θ_{z} between the sensor rows 200, 202 are needed from the measuring configuration. Inclination angles α₁, α₂ of the object 204 to be measured with respect to the sensor rows 200, 202 are also necessary. A change in the distance between the sensor rows is usually small, in the order of 1 µm. Nevertheless, when measuring a paper web, such a small change is significant since it accounts for a great part of the thickness of the paper web.

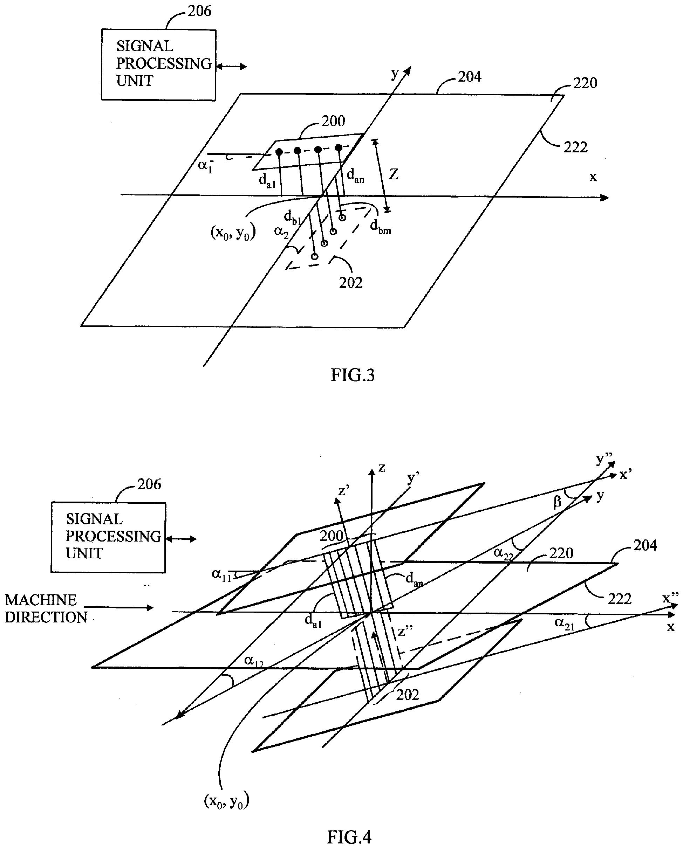

For the sake of simplicity, it is assumed in Figure 3 that the sensor rows 200, 202 are straight and at a right angle to one another. For the sake of simplicity, it is further assumed that the directions of the sensor rows 200, 202 are the same as the directions of the coordinates x, y of the object 204 to be measured. Further, the inclination of the object 204 to be measured is shown to be with respect to the sensor rows 200, 202 and thus also with respect to the direction x. A general case can be easily understood by means of this simplified and thus yet clear example. In Figure 3, the object 204 to be measured is thus inclined at an angle α₁ with respect to the direction of the sensor row 200. It may further be assumed herein that the sensor rows 200, 202 are not inclined with respect to one another. It can be seen in Figure 3 that the distances dₐ₁ to dₐₙ of each sensor 208 of the first sensor row 200 from the object 204 to be measured are different on account of the inclination angle. In the example of Figure 3, the distances of the sensors 210 of the first sensor row 200 to the object 204 to be measured are dₐ₁ to dₐₙ, where n is the number n of sensors 208 of the first sensor row 200. The distance dₐ₁ of the left-hand sensor is the greatest while the distance dₐₙ of the right-hand sensor is the smallest. Similarly, the distances of the second sensor row 202 are d_{b1} to d_{bm}, where m is the number of sensors 210 of the sensor row 202. Since the object 204 to be measured is at least approximately planar, a change in the distance between the sensors of the first sensor row 200 depends linearly or at least approximately linearly on the distance between the sensors. Thus, a tangent of the inclination angle α₁ in the direction of the sensor row 200 is the angular coefficient of a function expressing linear dependence. In such a case, the distance dₐᵢ of any sensor i of the first sensor row 200 from the object to be measured is dₐᵢ = dₐₘᵢₙ + sin(α₁)*lᵢ, where dₐₘᵢₙ is the shortest measured distance to the object 204 to be measured (in this example, the origin is placed at this point), lᵢ is the distance of the sensor i from a sensor having the shortest distance from the sensor, and sin(α₁) means a trigonometric sine function of the angle α₁. Since the angle α₁ is usually quite small, an approximate calculation formula may be written as dₐᵢ = dₐₘᵢₙ + α₁*lᵢ, if the angle is expressed in radians α₁. Generally, an inclination of the object 204 to be measured in the direction of the sensor row affects a distance dⱼᵢ measured by each sensor 208, 210 by a term sin(α)*li, where α is the inclination angle and lᵢ is the distance of the sensor i from the origin (x₀, y₀).

The object 204 to be measured may also be inclined at an angle α₂ with respect to the sensor row 202, in which case, correspondingly, no two sensors 210 of the second sensor row 202 produce the same distance measurement result. This inclination angle α₂ may be determined as the angle α₁. In a paper machine, the inclination angle of a paper web may usually vary between 0° and 20°, the most usual range thereof being perhaps between 0° and 5°.

Figure 4 shows a general case of inclination of the object 204 to be measured with respect to different sensor rows 200, 202. In such a case, the coordinates x, y of the object 204 to be measured may be rotated with respect to the coordinates x', y' and x", y" of the sensor rows 200, 202. The angle β between the axes x', y" is not necessarily a right angle. However, by means of simple modifications known per se to the coordinates it is possible to determine any inclination angle of the object 204 to be measured and the sensor rows 200, 202 in a desired coordinate system. The sensor row 200 may be inclined with respect to both the axis x and the axis y at angles α₁₁, α₁₂. Similarly, the sensor row 202 may be inclined with respect to both the axis x and the axis y at angles α₂₁, α₂₂.

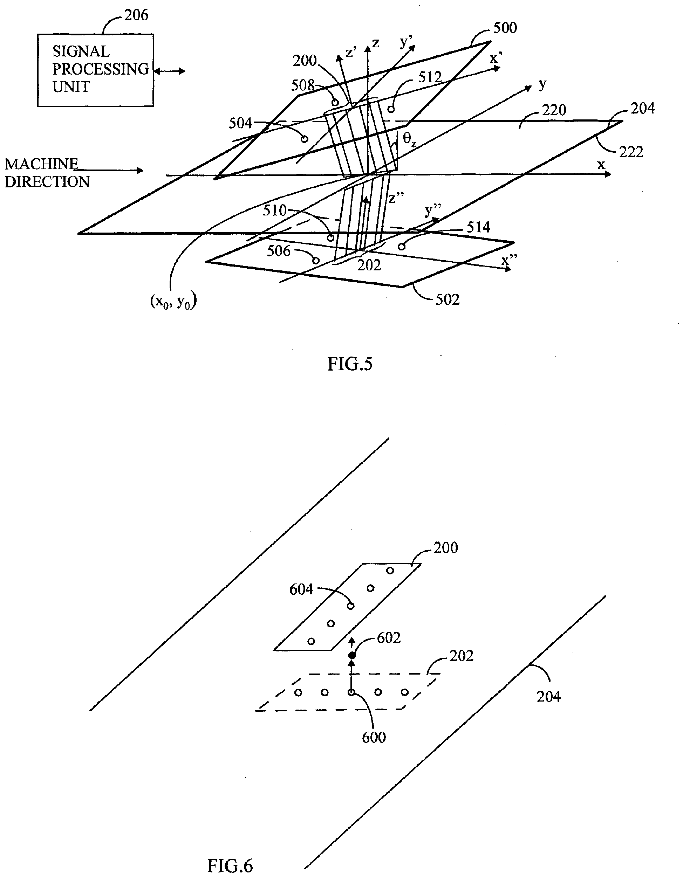

Figure 5 shows a situation wherein the sensor rows 200, 202 are inclined with respect to one another by angular variation θ_{z}. The inclination of the sensor rows 200, 202 with respect to one another has to be taken into account when measuring the thickness of the object 204 to be measured since at least some of the sensors 208, 210 then reside at a different distance from the object 204 to be measured.

The total inclination of the object 204 to be measured is thus determined by measurements carried out from different sides of the object 204 to be measured, in which case it is not necessary to provide both sides of the object 204 to be measured with a two-dimensional sensor matrix but the measurements may be carried out by one-dimensional sensor rows. This makes the measuring apparatus simpler.

Each sensor 208 of the first sensor row 200 may thus form the data representing the distance between the object 204 to be measured and the sensor from the surface 220 of the first side of the planar object 204 to be measured. Similarly, each sensor 210 of the second sensor row 202 may form the data representing the distance between the object 204 to be measured and the sensor from the surface 222 of the opposite side of the planar object 204 to be measured. The signal processing unit 206 determines the inclination angle α₁ of the surface of the first side 220 of the object 204 to be measured in the direction of the first sensor row 200 and the inclination angle α₂ of the surface of the opposite side in the direction of the second sensor row 202 in order to determine the total inclination of the object 204 to be measured. Since the directions of the first sensor row 200 and the second sensor row 202 differ from one another, two inclination angles that are inclination angles associated with any two different inclination directions may be determined. It may often be useful to determine one inclination angle in the direction of one dimension and another inclination angle in the direction of another dimension. The dimensions may be considered to be orthogonal with respect to one another. The directions of the dimensions may as such be selected freely. When a paper web on a paper machine is the object 204 to be measured, the dimensions may be a machine direction and a cross machine direction.

In an embodiment, the signal processing unit 206 may have data about the distance Z between the first sensor row 200 and the second sensor row 202 available in order to determine the thickness D of the object 204 to be measured, for instance. The sensor rows 200, 202 may have been installed such that they are fixedly spaced apart from one another, in which case the distance Z therebetween is not meant to change. The distance Z may have been measured in advance and stored in the memory of the signal processing unit 206 for calculation operations.

In an embodiment, a support structure 500 for the sensor row 200 and a support structure 502 for the sensor row 202 comprise mutual sensors 504, 506, 508, 510, 512, and 514 for measuring the distance Z between the sensor rows 200, 202 and producing distance measurement data which may also be used for forming data about the angular variation θ_{z} between the sensor rows 200, 202. The mutual sensors 504, 506, 508, 510, 512, and 514 may be placed in a plane so as to enable the inclination between the sensor rows 200, 202 in the direction of different dimensions to be detected. The mutual sensors 504, 506, 508, 510, 512, and 514 may measure the distance in pairs (504 ↔ 506), (508 ↔ 510), and (512 ↔ 514). The mutual sensors 504, 506, 508, 510, 512, and 514 may be magnetic, inductive, optical or acoustic sensors. The operation of magnetic sensors may be based on magnetostrictivity. The operation of induction sensors may be based on the eddy current phenomenon. The operation of optical sensors may be similar to that of the sensors 208, 210 of the sensor rows 200, 202. Acoustic operation may be based on ultrasonic technology.

In an embodiment, in order to determine the thickness of the object 204 to be measured, the signal processing unit 206 has data available about the intersection of the directions of the first sensor row 200 and the second sensor row 202, and this data may be used as the origin (x₀, y₀) in the measurement. The sensor rows 200, 202 may cross along the distance of their own length, or they do not necessarily cross along the distance of their own length even if their directions do cross. A change in the intersection means lateral displacement of the sensor rows 200, 202 with respect to one another, which may influence the measurement result on one or more properties of the object 204 to be measured.

In an embodiment, the signal processing unit 204 has data about the angular variation θ_{z} between the first sensor row 200 and the second sensor row 202 available in order to determine the thickness of the object 204 to be measured.

In an embodiment, the origin (x₀, y₀) and the angular variation θ_{z} may be determined as shown in Figure 6, for instance. If one sensor 600 of the sensor row 202 provided on one side of the object 204 to be measured is used for illuminating the object 204 to be measured by focused or collimated optical radiation, the location of a point 602 illuminated in the translucent object 204 to be measured may be detected by the sensor row 200 provided on the opposite side of the object 204 to be measured. In such a case, the highest intensity may be detected in a sensor 604 closest to the illuminated point 602. When starting the measurements, it is thus possible to determine the alignment of the sensor rows 200, 202 with respect to one another, i.e. the signal processing unit 206 may determine the origin (xo, yo) of the measurement coordinates. If in later measurements the highest intensity is detected by a sensor other than the sensor intended at the time of installation of the sensor rows 200, 202, it can be inferred that the sensors 208, 210 of the sensor row 200, 202 have inclined or moved with respect to one another. When comparing the result with measurements carried out by the mutual sensors 504 to 514, the signal processing unit 206 may conclude the magnitude of the inclination angle and/or movement and compensate for the influence of the change in the measurements of the object 204 to be measured, removing it therefrom.

In an embodiment, the lateral displacement between the sensor rows 200, 202 may be measured using measurement solutions known per se.

In an embodiment, the mutual sensors 504, 506, 508, 510, 512, and 514 associated with both sensor rows 200, 202 may, in addition to or instead of the operation mentioned in connection with Figure 5, measure the lateral displacement between the sensor rows 200, 220. This corresponds to the measurement of the intersection of the sensor rows 200, 202. The mutual sensors used for measuring the lateral displacement may be optical. It is also possible to use magnetic, inductive or acoustic sensors.

Both sensor rows 200, 202 may comprise a large number of sensors 208, 210 that are capable of accurately measuring the object 204 to be measured. Thousands of sensors 208, 210 may be provided, for example. The measurement inaccuracy of the sensor row 200, 202 may be e.g. tens of micrometres. In an embodiment, the measurement inaccuracy may be e.g. about one micrometre or less. In such a case, the signal processing unit 206 may determine the crosswise profiles of the first side 220 and the opposite side 222 of the object 204 to be measured over a distance of millimetres, centimetres or even tens of centimetres by measurement carried out at one moment in time. This enables profile measurement and thickness measurement to be combined with one another by using one-dimensional row detection even though the object 204 to be measured may incline in a three-dimensional space.

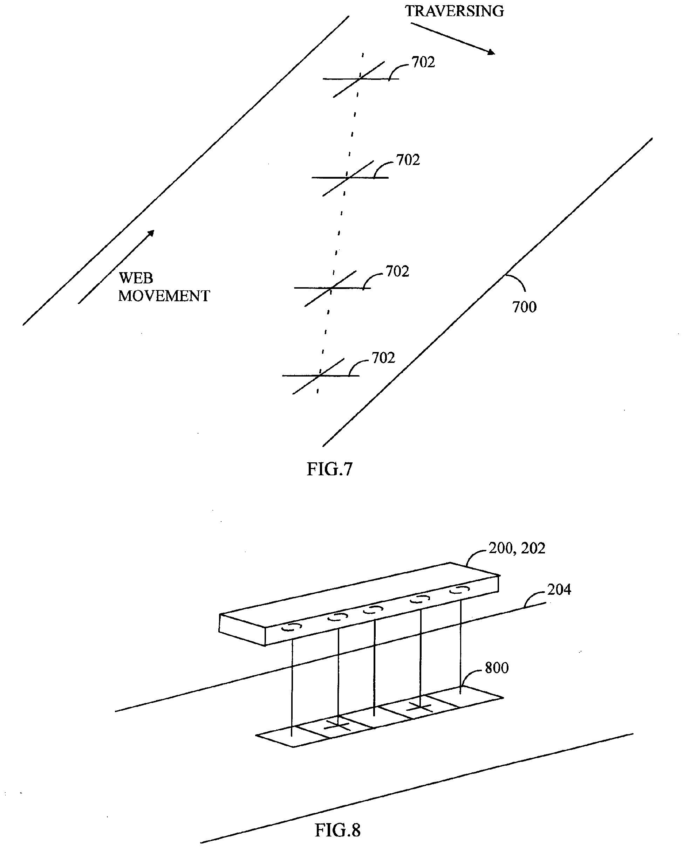

Figure 7 shows an example of profile measurements by a traversing measuring device on a moving paper web 700, which is the object 204 to be measured. When the paper web 700 moves at a high rate, it is impossible to obtain a continuous profile of the entire paper web 700, but the traversing measurement provides a whole range of separate profiles 702 in two different directions across the length and width of the entire paper web. Of a slowly moving paper web 700 it is also possible to obtain a continuous profile in both longitudinal and lateral directions.

In an embodiment, shown by Figure 8, the measurement of the distance from the first and second sensor rows 200, 202 to the object 204 to be measured may be based on structural light. In this solution, a desired pattern 800 is projected by the sensors 208, 210 of the sensor row 200, 202 onto the surface of the object 204 to be measured. Since irregularities of the measurement surface 204 distort the pattern 800, the signal processing unit 206 may e.g. by means of correlation or another comparison determine from the distortion of the pattern information in the depth direction of the object 204 to be measured, such as profile and/or roughness. Alternatively or additionally, the signal processing unit 206 may e.g. from the size of the received pattern 800 determine the distance between the sensor row 200, 202 and the object 204 to be measured.

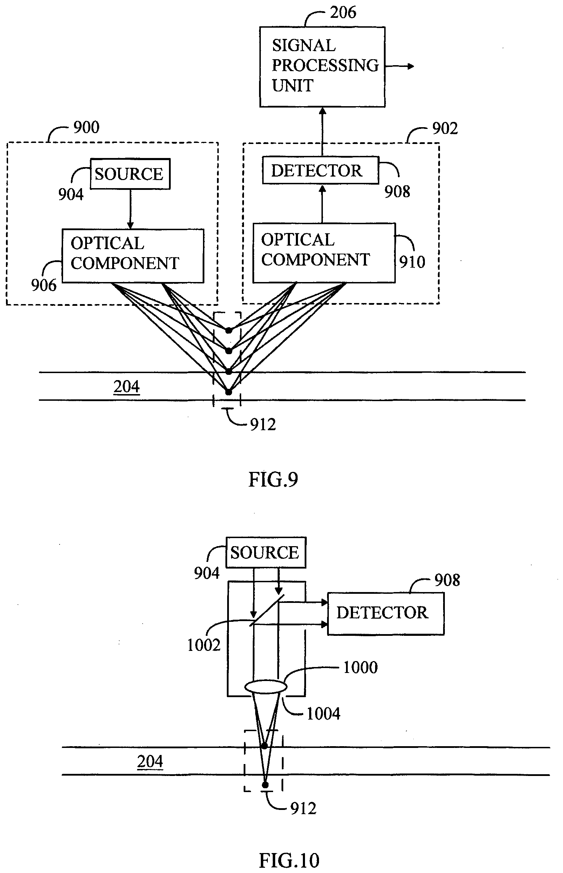

In an embodiment, described in Figures 9 and 10, each sensor 208 of the first sensor row 200 may form a row of chromatic foci 912 wherein each focus resides at a different distance in a direction from the sensor 208 to the object 204 to be measured and each focus is formed of a different wavelength. Each sensor 208 may receive optical radiation reflected from a focus provided on the surface of the object 204 to be measured. Wavelengths that are not in the focus on the surface of the object 204 to be measured are not reflected very well back to the sensors 208. The signal processing unit 206 may determine the distance of the object 204 to be measured from the focus on the basis of the received wavelength since the distance on which each wavelength is focused is predetermined. The sensors 210 of the second sensor row 202 may operate in a similar manner together with the signal processing unit 206.

Let us now examine one optical sensor which is formed by means of a pattern 9 of a row of chromatic foci. This solution employs a transmitter 900 and a receiver 902, which are separate from one another. The transmitter part 900 of the sensor may comprise an optical source 904 and an optical components part 906 which focus different wavelengths of optical radiation emitted from the optical source 904 on different distances in the space between the sensor rows 200, 202. Some wavelengths may be focused above the object 204 to be measured, some inside it and some below it (if it is imagined that the object 204 to be measured did not prevent the formation of a focus). Broadband optical radiation may be dispersed into separate wavelengths e.g. by means of a prism or a grating in the optical components part 906. The focusing, in turn, may be carried out by means of one or more lenses or mirrors by focusing different wavelengths on different focal points 912. The receiver part 902 of the sensor may comprise a detector 908 and a second optical components part 910. The second optical components part 910 focuses the received optical radiation on the detector 908. The signal processing unit 206 may determine which wavelength radiates the most strongly, i.e. is in focus on the surface of the object 204 to be measured.

Figure 10 shows an alternative manner to implement a row of chromatic foci. This solution employs a common transmission and reception aperture 1000. Optical radiation from the optical source 904 is directed through a beam splitter 1002 to an optical component 1004 which focuses different wavelengths on a different distance from the optical component 1004 via the aperture 1000. Reception is also carried out via the aperture 1000. In such a case, radiation passed through the optical component 1004 is by means of the beam splitter 1002 directed to the detector 908. Alternatively, the beam splitter 1002 may also reside between the aperture 1000 and the optical component 1004, in which case reception is carried out through the aperture 1000 but not through the optical component 1004.

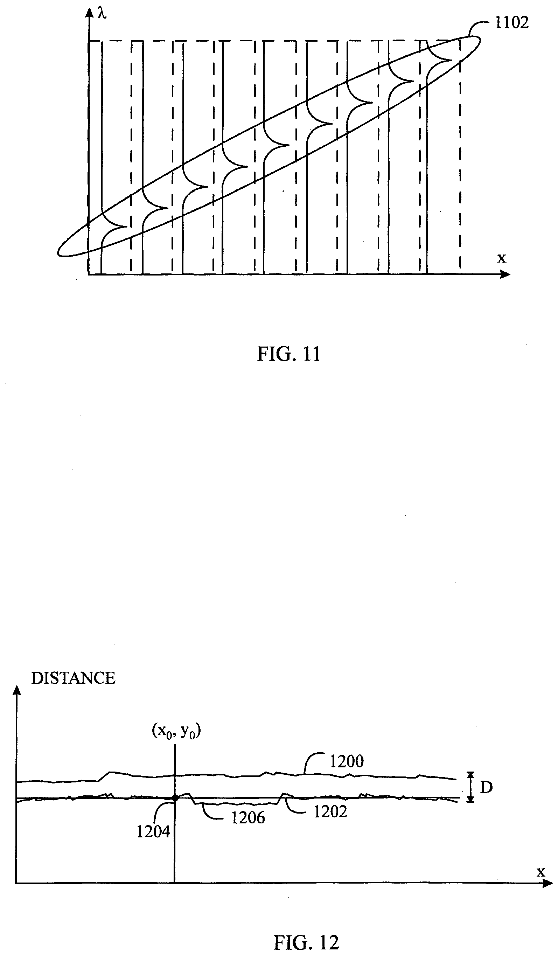

Figure 11 shows an intensity 1100 detected by the detector row 200, 208 as a function of wavelength λ and location x, where location x is given according to the location of each sensor 208, 210. Figure 11 shows a measurement wherein the object 204 to be measured is inclined with respect to the sensor rows 200, 202 in accordance with Figure 3. The wavelength of a maximum intensity 1102 changes according to the sensor 208, 210. Since a known dependency exists between the wavelength of the maximum intensity 1102 and the distance between the sensor 208, 210 and the object 204 to be measured, it is known what the inclination of the object 204 to be measured with respect to the sensors 208, 210 is. Also, since the distances between the sensors 208, 210 are known, it is possible to determine the inclination angle α₁, α₂ of the object 204 to be measured in the direction of the sensor row 200, 202. This further enables an inclination angle of the object 204 to be measured to be determined in any direction.

Figure 12 shows measured profiles and their distances from one another in the same coordinate system. A profile 1200 is measured by the sensor row 200 while a profile 1206 is measured by the sensor row 202. The y-axis is the distance in direction Z while the x-axis is the distance from start to end of the sensor 200, 202 on a freely-chosen scale. Even if the profiles are in different directions, they may be presented in the same coordinate system. When all measurement values on the profile are available, the thickness of the object 204 to be measured may be determined as an average from some or all values of the profiles after the inclination of the object to be measured, inclination between the sensor rows, and the distance between the sensor rows are known or measured. In an embodiment, the thickness D of the object 204 to be measured is determined as an average from a distance L - (dᵢ + d₀) in thickness direction between all points of the profile 1200 and a point 1204 of the sensor row 202, where i is the index of a sensor on one side while 0 is the index of a sensor on another side, in the origin. The distance L - (dᵢ + d₀) may be measured as the shortest distance of a straight line 1202 passing via the point 1204 and each point of the profile 1200 from one another. An advantage in such a measurement is that the average of thickness is obtained from a measurement carried out at one moment, without time integration. Such a measurement also improves the signal-to-noise ratio of the measurement, as compared with a measurement based on the measurement result of single sensors.

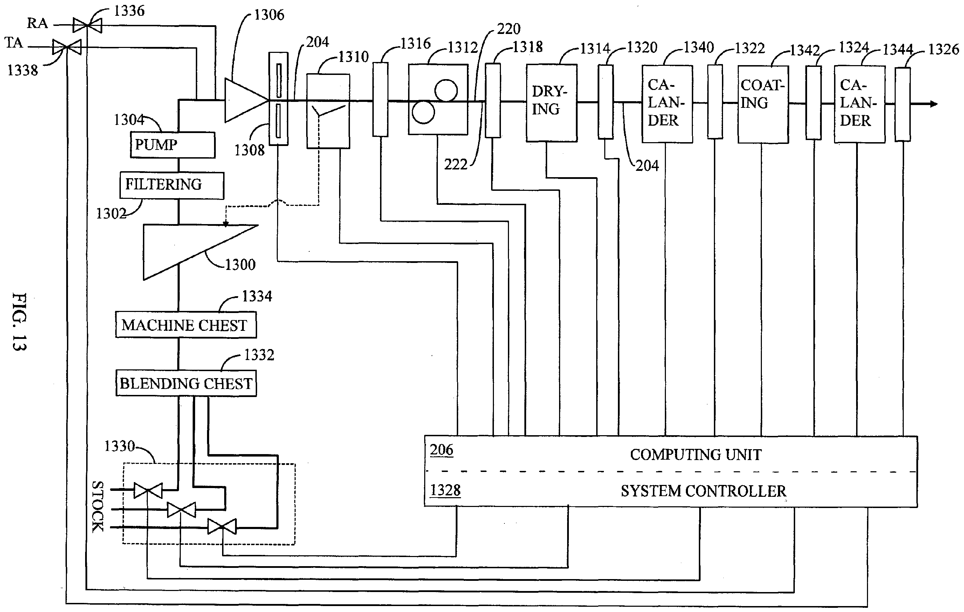

Figure 13 shows the structure of a paper machine in principle. In this solution, the object 204 to be measured is a paper web. One or more stocks are fed onto a paper machine through a wire pit silo 1300, which is usually preceded by a blending chest 1332 for partial stocks and a machine chest 1334. The machine stock is dispensed for a short circulation, controlled by a basis weight control or a grade change program, for instance. The blending chest 1332 and the machine chest 1334 may also be replaced by a separate mixing reactor (not shown in Figure 13), and the dispensing of the machine stock is controlled by feeding each partial stock separately by means of valves or another flow control member 1330. In the wire pit silo 1300, water is mixed with the machine stock to obtain a desired consistency for the short circulation (dashed line from a former 1310 to the wire pit silo 1300). From the thus obtained stock it is possible to remove sand (centrifugal cleaners), air (deculator) and other coarse material (pressure filter) by using cleaning devices 1302, and the stock is pumped by means of a pump 1304 to a headbox 1306. Before the headbox 1306, it is possible to add to the stock, in a desired manner, a filler TA, including e.g. gypsum, kaolin, calcium carbonate, talcum, chalk, titanium dioxide and diatomite, etc., and/or a retention agent RA, such as inorganic, inartificial organic or synthetic water-soluble organic polymers, via valves 1336 and 1338 whose dispensing may be controlled. With fillers it is possible to reduce the porosity in the paper web, for instance because a finegrained filler tends to fill air channels and cavities. This can be observed in formation and surface properties, opacity, brightness and printability. The retention agents RA, in turn, increase the retention of the fines and fillers while speeding up dewatering in a manner known per se. Both the fillers and the retention agents thus affect the structural properties of the paper, such as porosity, which can be seen in optical properties and smoothness of surface as well as topography.

From the headbox 1306 the stock is fed through a slice opening 1308 of the headbox to a former 1310, which may be a fourdrinier wire or a gap former. In the former 1310, water drains out of the web, which is the object 204 being measured, and additionally ash, fines and fibres are led to the short circulation. In the former 1310, the stock is fed onto the wire so as to form a moving web serving as the object 204 to be measured, and the web serving as the object 204 to be measured is dried and pressed preliminarily in a press 1312, which affects the porosity. The web serving as the object 204 to be measured is actually dried in driers 1314. Usually, a paper machine comprises at least one measuring device 1316 to 1326 which comprises crosswise sensor rows 200, 202 on different sides of the web. In the cross direction of the web serving as the object 204 to be measured, a row of several measuring device components 1316 to 1326 may be provided fixedly for measuring a cross-directional thickness and/or profile of the web. A system controller 1328 may comprise a computing unit 206, in which case data from the measuring device components 1316 to 1326 may first be received by the signal processing unit 206, the system controller 1328 being able to control the paper machine on the basis of the thickness and/or profile information formed by the signal processing unit 206.

When one or more measuring devices 1316 to 1326 are used for measuring the thickness and/or profile of the web, the measuring device 1316 to 1326 may traverse the web from edge to edge in the cross direction.

The paper machine, which in connection with this application refers to paper or board machines, may also include a pre-calender 1340, a coating section 1342 and/or a finishing calender 1344, the operation of which affects the porosity. However, no coating section 1342 is necessarily provided, in which case it is not necessary to have more than one calender 1340, 1344, either. In the coating section 1342, a coating paste, which may contain e.g. gypsum, kaolin, talcum or carbonate, starch and/or latex, may be spread onto the surface of the paper. The more porous the paper web, the better the coating paste adheres thereto. On the other hand, the roughness of a coated paper web is lower than that of an uncoated paper web. The uniformity of the profile is essential to uniform distribution of the coating agent.

In calenders 1340, 1344, where the uncoated or coated paper or board web runs between the rolls pressing with a desired force, it is possible to change the surface properties, thickness and porosity of the paper. In the calenders 1340, 1344, the properties of the paper web may be changed by means of web moistening, temperature and nip pressure between the rolls such that the higher the pressure exerted on the web, the lower the thickness and/or roughness becomes and the thinner, smoother and glossier the paper will be. Moistening and raised temperature may further reduce the roughness and make the paper thinner. In addition to this, it is clear that the operation of a paper machine is known per se to a person skilled in the art and, therefore, will not be presented in greater detail in this context.

The system controller 1328, which may also perform signal and data processing, may control various process of the paper machine on the basis of the measured pressure to ensure that the thickness and/or profile of the paper being manufactured, together with other properties, will meet the set requirements. The system controller 1328 may also present the measured thickness and/or profile graphically and/or numerically on a desired scale and according to a desired standard on a display, for instance. The operating principle of the system controller 1328 may be PID (Proportional-Integral-Derivative), MPC (Model Predictive Control) or GPC (General Predictive Control) control. The system controller 1328 may include a signal processing unit 206. The system controller 1328 and/or the signal processing unit 206 may comprise at least one processor, memory and a suitable computer program. The system controller 1328 and/or the signal processing unit 206 is a state machine whose state changes controlled by a clock signal sequentially on the basis of input signals, current state, and output signals. The input signals may comprise e.g. signals from a user interface and data from the sensors 208, 210 of the sensor rows 200, 202.

In addition to or instead of measuring the paper itself, the measurement of paper may also concern measuring the amount of a coating, smoothness, roughness, gloss, gloss variations, surface topography or the like. The amount of coat and/or coating also affects e.g. the smoothness, roughness, gloss, gloss variations and/or surface topography. For example, a property of the board and/or plastic on the board provided in a liquid package, such as thickness, may be measured.

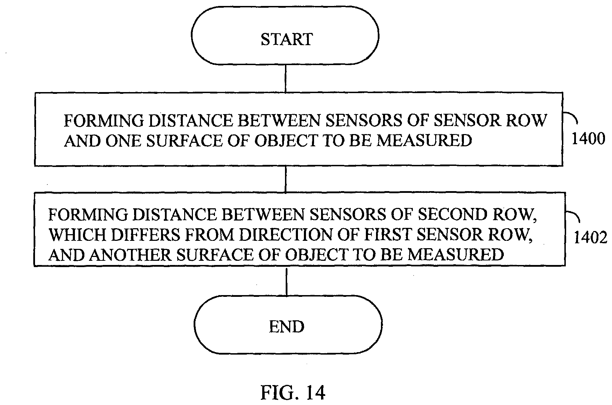

Figure 14 is a flow chart of the method. In step 1400, data representing the distance between the object 204 to be measured and the sensor 208 is formed by each sensor 208 of the first optical sensor row 200 from one side of the object 204 to be measured. In step 1402, data representing the distance between the object 204 to be measured and the sensor 210 is formed by each sensor 210 of the second optical sensor row 202 from another side of the object 204 to be measured, the direction of the second sensor row 202 differing from the direction of the first sensor row 200. In step 1404, said data representing the distance are sent from the sensor rows 200, 202 for determining the thickness of the object 204 to be measured on the basis of said data and the available data about the distance between the first sensor row 200 and the second sensor row 202.

Even though the invention has been described above with reference to the examples according to the attached drawings, it is clear that the invention is not restricted thereto but may be modified in many ways within the scope of the accompanying claims.

## Claims

1. A measuring device for measuring at least one property of an object (204) to be measured, wherein
the measuring device comprises a signal processing unit (206), a first optical sensor row (200) and a second optical sensor row (202) between which a planar object (204) to be measured is arranged to be placed;
the direction of the first sensor row (200) and the direction of the second sensor row (202) differ from one another for measuring the object (204) two-dimensionally on the basis of the differing directions of the first sensor row (200) and the second sensor row (202);
each sensor (208) of the first sensor row (200) is arranged to form data representing a distance between the object (204) to be measured and the sensor (208); and
each sensor (210) of the second sensor row (202) is arranged to form data representing a distance between the object (204) to be measured and the sensor (210), **characterized in that**
the signal processing unit (206) is, on the basis of said data of the sensors (208, 210) of the first sensor row (200) and the second sensor row (202), configured to determine an inclination angle of the surface of the first side of the object (204) in one direction and an inclination angle of the surface of the opposite side in another direction for determining a total inclination of the object (204) .

2. A measuring device as claimed in claim 1, **characterized in that** the measuring device comprises at least one optical, magnetic, eddy current and/or ultrasonic mutual sensor pair (504 to 514) for determining a distance between the optical sensor rows (200, 202).

3. A measuring device as claimed in claim 1 or 2, **characterized in that** the measuring device comprises at least two optical, magnetic, eddy current and/or ultrasonic mutual sensor pairs (504 to 514) for determining an inclination angle between the optical sensor rows (200, 202).

4. A measuring device as claimed in claim 1, **characterized in that** each sensor (208) of the first sensor row (200) is arranged to form a row of foci (912) wherein each focus is formed of a different wavelength and resides at a different distance in a direction from the sensor (208, 210) to the object (204) to be measured, and to receive optical radiation reflected from a focus provided on the surface of the object (204) to be measured; and each sensor (208, 210) of the second sensor row (202) is arranged to form a row of foci (912) wherein each focus is formed of a different wavelength and resides at a different distance in a direction from the sensor (210) to the object (204) to be measured, and to receive optical radiation reflected from a focus provided on the surface of the object (204) to be measured.

5. A measuring device as claimed in claim 1, **characterized in that** the first and the second sensor rows are arranged to measure the distance between the sensor rows (200, 202) and the object (204) to be measured by means of structural light.

6. A measuring device as claimed in claim 1, **characterized in that** the measuring device comprises a signal processing unit (206) arranged to determine said at least one property of the object (204) to be measured by means of the data from the sensors (208, 210) of the first sensor row (200) and the second sensor row (202).

7. A measuring device as claimed in claim 6, **characterized in that** the signal processing unit (206) is arranged to determine a thickness of the object (204) to be measured by means of said data.

8. A measuring device as claimed in claim 6, **characterized in that** the signal processing unit (206) has data about the distance (Z) between the first sensor row (200) and the second sensor row (202) available in order to determine the thickness of the object (204) to be measured.

9. A measuring device as claimed in claim 6, **characterized in that** the signal processing unit (206) has data about an intersection (xo, yo) of the directions of the first sensor row (200) and the second sensor row (202) available in order to determine the thickness of the object (204) to be measured.

10. A measuring device as claimed in claim 6, **characterized in that** the signal processing unit (206) has angular variation data between the first sensor row (200) and the second sensor row (202) available in order to determine the thickness of the object (204) to be measured.

11. A measuring device as claimed in claim 6, **characterized in that** the signal processing unit (206) is arranged to determine crosswise profiles of a first surface and an opposite surface of the object (204) to be measured.

12. A measuring device as claimed in claim 6, **characterized in that** the signal processing unit (206) is arranged to determine a distance of the object (204) to be measured from the focus on the basis of a received wavelength.

13. A method for measuring at least one property of a planar object (204)to be measured, **characterized by**
forming (1400), by each sensor (208) of a first optical sensor row (200), data representing a distance between the object (204) to be measured and the sensor (208) from one side of the object (204) to be measured;
forming (1402), by each sensor (210) of a second optical sensor row (202), data representing a distance between the object (204) to be measured and the sensor (210) from another side of the object (24) to be measured, a direction of the second sensor row (202) differing from a direction of the first sensor row (200) for measuring the object (204) two-dimensionally on the basis of the differing directions of the first sensor row (200) and the second sensor row (202), and
determining, on the basis of said data of sensors (208, 210) of the first sensor row (200) and the second sensor row (202), an inclination angle of the surface of the first side (220) of the object (204) in one direction and an inclination angle of the surface of the opposite side in another direction for determining a total inclination of the object (204).

14. A method as claimed in claim 13, **characterized by** forming by means of each sensor (208) of the first sensor row (200) a row of foci (912) wherein each focus is formed of a different wavelength and resides at a different distance in a direction from the sensor (208, 210) to the object (204) to be measured, and receiving optical radiation reflected from a focus provided on the surface of the object (204) to be measured, and determining by means of a signal processing unit (206) a distance of the object to be measured from the focus on the basis of the received wavelength; and forming by means of each sensor (208, 210) of the second sensor row (202) a row of foci (912) wherein each focus is formed of a different wavelength and resides at a different distance in a direction from the sensor (210) to the object (204) to be measured, and receiving optical radiation reflected from a focus provided on the surface of the object (204) to be measured; and determining by means of the signal processing unit (206) a distance of the object (204) to be measured from the focus on the basis of the received wavelength.

## Patentansprüche

1. Messvorrichtung zum Messen von mindestens einer Eigenschaft eines zu messenden Objekts (204), wobei
die Messvorrichtung eine Signalverarbeitungseinheit (206), eine erste optische Sensorreihe (200) und eine zweite optische Sensorreihe (202), zwischen die ein zu messendes planares Objekt (204) angeordnet ist, platziert zu werden, umfasst;
sich die Richtung der ersten Sensorreihe (200) und die Richtung der zweiten Sensorreihe (202) zum zweidimensionalen Messen des Objekts (204) auf Basis der unterschiedlichen Richtungen der ersten Sensorreihe (200) und der zweiten Sensorreihe (202) voneinander unterscheiden;
jeder Sensor (208) der ersten Sensorreihe (200) angeordnet ist, Daten zu bilden, die einen Abstand zwischen dem zu messenden Objekt (204) und dem Sensor (208) repräsentieren; und
jeder Sensor (210) der zweiten Sensorreihe (202) angeordnet ist, Daten zu bilden, die einen Abstand zwischen dem zu messenden Objekt (204) und dem Sensor (210) repräsentieren, **dadurch gekennzeichnet, dass**
die Signalverarbeitungseinheit (206) auf Basis der Daten der Sensoren (208, 210) der ersten Sensorreihe (200) und der zweiten Sensorreihe (202) dazu ausgelegt ist, zum Bestimmen einer Gesamtneigung des Objekts (204) einen Neigungswinkel der Fläche der ersten Seite des Objekts (204) in eine Richtung und einen Neigungswinkel der Fläche der gegenüberliegenden Seite in eine andere Richtung zu bestimmen.

2. Messvorrichtung nach Anspruch 1, **dadurch gekennzeichnet, dass** die Messvorrichtung mindestens ein gegenseitiges optisches, magnetisches, Wirbelstrom- und/oder Ultraschallsensorpaar (504 bis 514) zum Bestimmen eines Abstands zwischen den optischen Sensorreihen (200, 202) umfasst.

3. Messvorrichtung nach Anspruch 1 oder 2, **dadurch gekennzeichnet, dass** die Messvorrichtung mindestens zwei gegenseitige optische, magnetische, Wirbelstrom- und/oder Ultraschallsensorpaare (504 bis 514) zum Bestimmen eines Neigungswinkels zwischen den optischen Sensorreihen (200, 202) umfasst.

4. Messvorrichtung nach Anspruch 1, **dadurch gekennzeichnet, dass** jeder Sensor (208) der ersten Sensorreihe (200) angeordnet ist, eine Reihe von Fokussen (912) zu bilden, wobei jeder Fokus aus einer anderen Wellenlänge gebildet ist und sich in einer Richtung vom Sensor (208, 210) zu dem zu messenden Objekt (204) in einem anderen Abstand befindet, und optische Strahlung zu empfangen, die von einem Fokus reflektiert wird, der auf der Fläche des Objekts (204) bereitgestellt ist; und jeder Sensor (208, 210) der zweiten Sensorreihe (202) angeordnet ist, eine Reihe von Fokussen (912) zu bilden, wobei jeder Fokus aus einer anderen Wellenlänge gebildet ist und sich in einer Richtung vom Sensor (210) zu dem zu messenden Objekt (204) in einem anderen Abstand befindet, und optische Strahlung zu empfangen, die von einem Fokus reflektiert wird, der auf der Fläche des Objekts (204) bereitgestellt ist.

5. Messvorrichtung nach Anspruch 1, **dadurch gekennzeichnet, dass** die erste und die zweite Sensorreihe angeordnet sind, den Abstand zwischen den Sensorreihen (200, 202) und dem zu messenden Objekt (204) mittels Strukturlicht zu messen.

6. Messvorrichtung nach Anspruch 1, **dadurch gekennzeichnet, dass** die Messvorrichtung eine Signalverarbeitungseinheit (206) umfasst, die angeordnet ist, die mindestens eine Eigenschaft des zu messenden Objekts (204) mittels der Daten von den Sensoren (208, 210) der ersten Sensorreihe (200) und der zweiten Sensorreihe (202) zu bestimmen.

7. Messvorrichtung nach Anspruch 6, **dadurch gekennzeichnet, dass** die Signalverarbeitungseinheit (206) angeordnet ist, eine Dicke des zu messenden Objekts (204) mittels der Daten zu bestimmen.

8. Messvorrichtung nach Anspruch 6, **dadurch gekennzeichnet, dass** die Signalverarbeitungseinheit (206) über Daten über den Abstand (Z) zwischen der ersten Sensorreihe (200) und der zweiten Sensorreihe (202) verfügt, um die Dicke des zu messenden Objekts (204) zu bestimmen.

9. Messvorrichtung nach Anspruch 6, **dadurch gekennzeichnet, dass** die Signalverarbeitungseinheit (206) über Daten über einen Schnittpunkt (x₀, y₀) der Richtungen der ersten Sensorreihe (200) und der zweiten Sensorreihe (202) verfügt, um die Dicke des zu messenden Objekts (204) zu bestimmen.

10. Messvorrichtung nach Anspruch 6, **dadurch gekennzeichnet, dass** die Signalverarbeitungseinheit (206) über Winkelabweichungsdaten zwischen der ersten Sensorreihe (200) und der zweiten Sensorreihe (202) verfügt, um die Dicke des zu messenden Objekts (204) zu bestimmen.

11. Messvorrichtung nach Anspruch 6, **dadurch gekennzeichnet, dass** die Signalverarbeitungseinheit (206) angeordnet ist, ein Überkreuzprofil einer ersten Fläche und einer gegenüberliegenden Fläche des zu messenden Objekts (204) zu bestimmen.

12. Messvorrichtung nach Anspruch 6, **dadurch gekennzeichnet, dass** die Signalverarbeitungseinheit (206) angeordnet ist, auf Basis einer empfangenen Wellenlänge einen Abstand des zu messenden Objekts (204) vom Fokus zu bestimmen.

13. Verfahren zum Messen von mindestens einer Eigenschaft eines planaren zu messenden Objekts (204), **gekennzeichnet durch**
Bilden (1400) von Daten, die einen Abstand zwischen dem zu messenden Objekt (204) und dem Sensor (208) von einer Seite des zu messenden Objekts (204) repräsentieren, durch jeden Sensor (208) einer ersten optischen Sensorreihe (200);
Bilden (1400) von Daten, die einen Abstand zwischen dem zu messenden Objekt (204) und dem Sensor (210) von einer anderen Seite des zu messenden Objekts (24) repräsentieren, durch jeden Sensor (210) einer zweiten optischen Sensorreihe (202), wobei sich eine Richtung der zweiten Sensorreihe (202) von einer Richtung der ersten Sensorreihe (200) zum zweidimensionalen Messen des Objekts (204) auf Basis der unterschiedlichen Richtungen der ersten Sensorreihe (200) und der zweiten Sensorreihe (202) voneinander unterscheiden, und
Bestimmen auf Basis der Daten der Sensoren (208, 210) der ersten Sensorreihe (200) und der zweiten Sensorreihe (202) eines Neigungswinkels der Fläche der ersten Seite (220) des Objekts (204) in eine Richtung und eines Neigungswinkels der Fläche der gegenüberliegenden Seite in eine andere Richtung, um eine Gesamtneigung des Objekts (204) zu bestimmen.

14. Verfahren nach Anspruch 13, **gekennzeichnet durch** Bilden einer Reihe von Fokussen (912) durch jeden Sensor (208) der ersten Sensorreihe (200), wobei jeder Fokus aus einer anderen Wellenlänge gebildet ist und sich in einer Richtung vom Sensor (208, 210) zu dem zu messenden Objekt (204) in einem anderen Abstand befindet, und Empfangen von optischer Strahlung, die von einem Fokus reflektiert wird, der auf der Fläche des zu messenden Objekts (204) bereitgestellt ist, und Bestimmen eines Abstands des zu messenden Objekts vom Fokus auf Basis der empfangenen Wellenlänge durch eine Signalverarbeitungseinheit (206) und Bilden einer Reihe von Fokussen (912) durch jeden Sensor (208, 210) der zweiten Sensorreihe (202), wobei jeder Fokus aus einer anderen Wellenlänge gebildet ist und sich in einer Richtung vom Sensor (208, 210) zu dem zu messenden Objekt (204) in einem anderen Abstand befindet, und Empfangen von optischer Strahlung, die von einem Fokus reflektiert wird, der auf der Fläche des zu messenden Objekts (204) bereitgestellt ist; und Bestimmen eines Abstands des zu messenden Objekts (204) vom Fokus auf Basis der empfangenen Wellenlänge durch die Signalverarbeitungseinheit (206).

## Revendications

1. Dispositif de mesure pour mesurer au moins une propriété d'un objet (204) à mesurer, dans lequel
le dispositif de mesure comprend une unité de traitement de signaux (206), une première rangée de capteurs (200) optiques et une deuxième rangée de capteurs (202) optiques entre lesquels un objet (204) plan à mesurer est agencé pour être placé ;
la direction de la première rangée de capteurs (200) et la direction de la deuxième rangée de capteurs (202) diffèrent l'une de l'autre pour mesurer l'objet (204) sur deux dimensions, en se basant sur les directions différentes de la première rangée de capteurs (200) et de la deuxième rangée de capteurs (202) ;
chaque capteur (208) de la première rangée de capteurs (200) est agencé pour former des données représentant une distance entre l'objet (204) à mesurer et le capteur (208) ; et
chaque capteur (210) de la deuxième rangée de capteurs (202) est agencé pour former des données représentant une distance entre l'objet (204) à mesurer et le capteur (210), **caractérisé en ce que**
l'unité de traitement de signaux (206) est configurée, en se basant sur lesdites données des capteurs (208, 210) de la première rangée de capteurs (200) et de la deuxième rangée de capteurs (202), pour déterminer un angle d'inclinaison de la surface du premier côté de l'objet (204) dans une direction et un angle d'inclinaison de la surface du côté opposé dans une autre direction, pour déterminer une inclinaison totale de l'objet (204) .

2. Dispositif de mesure selon la revendication 1, **caractérisé en ce que** le dispositif de mesure comprend au moins une paire de capteurs mutuels optiques, magnétiques, à courant de Foucault et/ou ultrasoniques (504 à 514) pour déterminer une distance entre les rangées de capteurs optiques (200, 202).

3. Dispositif de mesure selon la revendication 1 ou 2, **caractérisé en ce que** le dispositif de mesure comprend au moins deux paires de capteurs mutuels optiques, magnétiques, à courant de Foucault et/ou ultrasoniques (504 à 514) pour déterminer un angle d'inclinaison entre les rangées de capteurs optiques (200, 202).

4. Dispositif de mesure selon la revendication 1, **caractérisé en ce que** chaque capteur (208) de la première rangée de capteurs (200) est agencé pour former une rangée de foyers (912) où chaque foyer est formé d'une longueur d'onde différente et se situe à une distance différente, dans une direction allant du capteur (208, 210) à l'objet (204) à mesurer, et pour recevoir un rayonnement optique réfléchi par le foyer prévu sur la surface de l'objet (204) à mesurer ; et chaque capteur (208, 210) de la deuxième rangée de capteurs (202) est agencé pour former une rangée de foyers (912) où chaque foyer est formé d'une longueur d'onde différente et se situe à une distance différente, dans une direction allant du capteur (210) à l'objet (204) à mesurer, et pour recevoir un rayonnement optique réfléchi par le foyer prévu sur la surface de l'objet (204) à mesurer.

5. Dispositif de mesure selon la revendication 1, **caractérisé en ce que** les première et deuxième rangées de capteur sont agencées pour mesurer la distance entre les rangées de capteur (200, 202) et l'objet (204) à mesurer au moyen d'une lumière structurale.

6. Dispositif de mesure selon la revendication 1, **caractérisé en ce que** le dispositif de mesure comprend une unité de traitement de signaux (206) agencée pour déterminer ladite au moins une propriété de l'objet (204) à mesurer au moyen des données provenant des capteurs (208, 210) de la première rangée de capteurs (200) et de la deuxième rangée de capteurs (202).

7. Dispositif de mesure selon la revendication 6, **caractérisé en ce que** l'unité de traitement de signaux (206) est agencée pour déterminer une épaisseur de l'objet (204) à mesurer au moyen desdites données.

8. Dispositif de mesure selon la revendication 6, **caractérisé en ce que** l'unité de traitement de signaux (206) dispose de données sur la distance (Z) entre la première rangée de capteurs (200) et la deuxième rangée de capteurs (202) disponibles afin de déterminer l'épaisseur de l'objet (204) à mesurer.

9. Dispositif de mesure selon la revendication 6, **caractérisé en ce que** l'unité de traitement de signaux (206) dispose de données sur une intersection (X₀, Y₀) des directions de la première rangée de capteurs (200) et de la deuxième rangée de capteurs (202) disponibles afin de déterminer l'épaisseur de l'objet (204) à mesurer.

10. Dispositif de mesure selon la revendication 6, **caractérisé en ce que** l'unité de traitement de signaux (206) dispose de données de variation angulaire entre la première rangée de capteurs (200) et la deuxième rangée de capteurs (202) disponibles afin de déterminer l'épaisseur de l'objet (204) à mesurer.

11. Dispositif de mesure selon la revendication 6, **caractérisé en ce que** l'unité de traitement de signaux (206) est agencée pour déterminer des profils transversaux d'une première surface et d'une surface opposée de l'objet (204) à mesurer.

12. Dispositif de mesure selon la revendication 6, **caractérisé en ce que** l'unité de traitement de signaux (206) est agencée pour déterminer une distance entre l'objet (204) à mesurer et le foyer, en se basant sur une longueur d'onde reçue.

13. Procédé pour mesurer au moins une propriété d'un objet (204) plan à mesurer, **caractérisé par**
la formation (1400), à l'aide de chaque capteur (208) d'une première rangée de capteurs (200) optiques, de données représentant une distance entre l'objet (204) à mesurer et le capteur (208), à partir d'un côté de l'objet (204) à mesurer ;
la formation (1402), à l'aide de chaque capteur (210) d'une deuxième rangée de capteurs (202) optiques, de données représentant une distance entre l'objet (204) à mesurer et le capteur (210), à partir d'un autre côté de l'objet (24) à mesurer, où une direction de la deuxième rangée de capteurs (202) diffère d'une direction de la première rangée de capteurs (200), pour mesurer l'objet (204) sur deux dimensions en se basant sur les directions différentes de la première rangée de capteurs (200) et de la deuxième rangée de capteurs (202), et
la détermination, en se basant sur lesdites données de capteurs (208, 210) de la première rangée de capteurs (200) et de la deuxième rangée de capteurs (202), d'un angle d'inclinaison de la surface du premier côté (220) de l'objet (204) dans une direction, et d'un angle d'inclinaison de la surface du côté opposé dans une autre direction, pour déterminer une inclinaison totale de l'objet (204).

14. Procédé selon la revendication 13, **caractérisé par** la formation, au moyen de chaque capteur (208) de la première rangée de capteurs (200), d'une rangée de foyers (912) où chaque foyer est formé d'une longueur d'onde différente et se situe à une distance différente, dans une direction allant du capteur (208, 210) à l'objet (204) à mesurer, et la réception d'un rayonnement optique réfléchi par le foyer prévu sur la surface de l'objet (204) à mesurer, et la détermination, au moyen d'une unité de traitement de signaux (206), d'une distance entre l'objet à mesurer et le foyer, en se basant sur la longueur d'onde reçue ; et la formation, au moyen de chaque capteur (208, 210) de la deuxième rangée de capteurs (202), d'une rangée de foyers (912) où chaque foyer est formé d'une longueur d'onde différente et se situe à une distance différente, dans une direction allant du capteur (210) à l'objet (204) à mesurer, et la réception d'un rayonnement optique réfléchi par le foyer prévu sur la surface de l'objet (204) à mesurer ; et la détermination, au moyen de l'unité de traitement de signaux (206), d'une distance entre l'objet (204) à mesurer et le foyer, en se basant sur la longueur d'onde reçue.
